# FASCICULE DE BREVET EUROPEEN

(11) **EP 1 217 474 B1**
(45) Date de publication et mention de la délivrance du brevet: **26.03.2008**
(21) Numéro de dépôt: 01402991.2
(22) Date de dépôt: 22.11.2001
(51) Int. Cl.: G05B 17/02

(54) **Méthode pour former un module à réseaux neuronaux optimisé, destiné à simuler le mode d'écoulement d'une veine de fluides polyphasiques**
Verfahren zur Herstellung eines optimierten Neuronal-netzwerk Modules zur Simulation des Durchflussmodes einer mehrphasigen Flussigkeitsvene
Method for producing an optimized neural network module for simulating the flow mode of a multiphased vein of fluids

(30) Priorité: 22.12.2000 FR 0016878
(43) Date de publication de la demande: 26.06.2002
(73) Titulaire: Institut Français du Pétrole, 92852 Rueil-Malmaison Cedex (FR)
(72) Inventeur: Rey-Fabret, Isabelle, 78000 Versailles (FR); Duret, Emmanuel, 92500 Rueil Malmaison (FR); Heintze, Eric, 92190 Meudon (FR); Henriot, Véronique, 92500 Rueil Malmaison (FR)

(56) Documents cités:
- FR-A- 2 756 044
- US-A- 5 619 433
- US-A- 6 047 221
- C.BISHOP ET AL: "ANALYSIS OF MULTIPHASE FLOWS USING DUAL-ENERGY GAMMA DENSITOMETRY AND NEURAL NETWORKS" NUCLEAR INSTRUMENTS & METHODS IN PHYSICS RESEARCH.SECTION A, vol. A327, no. 2-3, 1 avril 1993 (1993-04-01), pages 580-593, XP000997025 NETHERLANDS

## Description

La présente invention a pour objet une méthode pour former un module à réseaux neuronaux, destiné à simuler en temps réel le mode d'écoulement en tout point d'une conduite, d'une veine de fluide polyphasique comprenant au moins une phase liquide et au moins une phase gazeuse, qui soit le mieux adapté à des conditions opératoires et à un ensemble de grandeurs physiques fixées

### Etat de la technique

L'acheminement des hydrocarbures depuis les sites de production jusqu'aux unités de traitement constitue un maillon important de la chaîne pétrolière. C'est un maillon délicat en raison de la complexité des interactions entre les phases constituant les effluents transportés. Les opérateurs ont pour objectif premier d'atteindre une productivité optimale dans les meilleures conditions de sécurité. Ils doivent donc gérer au mieux la vitesse et la température, pour éviter des pertes de charges superflues, des dépôts indésirables et des irrégularités d'écoulement. La méthode généralement utilisée consiste à modéliser au mieux le transport de flux polyphasiques complexes de façon à fournir à chaque instant une image des écoulements dans les différentes parties de la chaîne de production, tenant compte de la constitution précise de l'effluent, les débits et pressions et les modes d'écoulement.

Il existe actuellement différents modules logiciels de simulation du transport de flux polyphasiques complexes, permettant à une stade précoce de concevoir des équipements de production adaptés.

Par les brevets US 5 550 761, FR 2.756.044 (US 6 028 992) et FR 2 756 045 (US 5 960 187) du demandeur, notamment, on connaît des modules de modélisation formant le modèle Tacite connu des gens de métier, permettant de simuler le transport de flux polyphasiques complexes en régime permanent ou transitoire et capables de prendre en compte des phénomènes d'instabilité qui se produisent du fait de la géométrie irrégulière du terrain où passe la conduite ou de la topographie de celle-ci, que les spécialistes désignent par « terrain slugging » ou « severe slugging ».

La complexité des modules de simulation est à l'image de celle des phénomènes modélisés. Précision et performances ne peuvent être obtenues qu'après un temps de modélisation relativement important qui s'avère difficilement compatible avec une gestion en temps réel. C'est pourquoi ces modules de modélisation ne peuvent en l'état servir à la gestion en temps réel de la production. Dans cette optique, il est ainsi apparu nécessaire de mettre en oeuvre des méthodes de modélisation permettant un bon compromis entre rapidité de calcul et précision des résultats.

Par la demande de brevet EP-A-1 176 481 du demandeur, on connaît une méthode pour estimer en temps réel le mode d'écoulement en tout point d'une conduite de structure que l'on peut définir par un certain nombre de paramètres de structure, d'une veine de fluide polyphasique définie par plusieurs grandeurs physiques et comprenant des phases liquides et gazeuses. Suivant cette méthode, on réalise une modélisation du mode d'écoulement :
- en formant un réseau neuronal non linéaire avec une couche d'entrée avec autant d'entrées que de paramètres de structure et de grandeurs physiques, une couche de sortie avec autant de sorties que de grandeurs nécessaires à l'estimation du mode d'écoulement et au moins une couche intermédiaire ;
- en constituant une base d'apprentissage avec des tables prédéfinies reliant différentes valeurs obtenues pour les données de sortie aux valeurs correspondantes des données d'entrée ; et
- en déterminant par itérations des facteurs de pondération de la fonction d'activation permettant de relier correctement les valeurs dans les tables des données d'entrée et de sortie.

De préférence, on analyse des données de sortie des neurones de façon à trier, parmi les valeurs des données de sortie du réseau de neurones, les seules données pertinentes à prendre en compte dans la détermination itérative des coefficients de pondération de la fonction d'activation.

### La méthode selon l'invention

- La méthode selon l'invention permet de construire un module destiné à simuler en temps réel le mode d'écoulement en tout point d'une conduite, d'une veine de fluide polyphasique comprenant au moins une phase liquide et au moins une phase gazeuse, de façon qu'il soit le mieux adapté à des conditions opératoires fixées propres à une production d'un champ pétrolier, lesdites conditions portant sur un certain nombre de paramètres structurels et physiques définis relatifs à la conduite, et sur un ensemble de grandeurs physiques hydrodynamiques ou thermodynamiques définies, avec des gammes de variation fixées pour les paramètres et les grandeurs physiques.
- Elle comporte l'utilisation d'un système de modélisation constitué à base de réseaux neuronaux non linéaires avec chacun des entrées pour des paramètres de structure et des grandeurs physiques, et des sorties où sont disponibles des grandeurs nécessaires à l'estimation du mode d'écoulement, et au moins une couche intermédiaire. Les réseaux neuronaux sont déterminés itérativement pour s'ajuster aux valeurs d'une base d'apprentissage avec des tables prédéfinies reliant différentes valeurs obtenues pour les données de sortie aux valeurs correspondantes des données d'entrée.
- La méthode se caractérise en ce que l'on forme une base d'apprentissage adaptée aux conditions opératoires imposées et on génère des réseaux neuronaux optimisés s'ajustant au mieux aux conditions opératoires imposées.

Dans le cas, par exemple, où le module doit être intégré à un modèle général à la fois hydrodynamique et thermodynamique de simulation d'écoulements polyphasiques, on utilise le modèle pour former la base d'apprentissage, de manière à sélectionner l'ensemble de grandeurs physiques le mieux adapté au fonctionnement du modèle, ainsi que les gammes de variation fixées pour les dits paramètres et les dites grandeurs physiques, et l'on génère les réseaux neuronaux optimisés s'ajustant au mieux à la base d'apprentissage formée.

### DESCRIPTION DETAILLEE

### Généralités sur la formation du système de réseaux

On considère une circulation de fluides polyphasiques dans une conduite avec au moins une phase liquide et au moins une phase gazeuse et l'on cherche à construire un système neuronal permettant, à partir d'un certain nombre de données d'entrée géométriques et physiques relatives à la conduite et de données physiques sur les fluides, de donner à chaque instant et pour chaque section de la veine fluide une estimation du mode d'écoulement, ou bien, à partir d'un certain nombre de données liées aux conditions de pression et de température sous lesquelles se trouve le fluide, et à la composition du fluide, de donner le comportement thermodynamique du fluide. L'ensemble de ces données d'entrée constitue une base de données.

### 1) entrées et sorties

Les données d'entrée sont par exemple :
- des données géométriques et physiques des conduites: diamètre, rugosité et angle d'inclinaison du conduit, et des données thermodynamiques : masse volumique de gaz, masse volumique de liquide, viscosité du gaz, viscosité du liquide, etc. ; l'ensemble de ces données constituant un n-uplet ; et
- des données hydrodynamiques caractérisant le mélange: tension superficielle gaz/liquide, fraction volumique de gaz, vitesse barycentrique du mélange, etc.
ou bien :
- des données thermodynamiques relatives à l'environnement du fluide : pression, température, l'ensemble de ces données constituant un n-uplet, ainsi que des données caractérisant la composition du mélange : masse molaire, propriétés critiques, coefficients d'enthalpie, etc.

Le modèle produit par exemple en sortie le comportement hydrodynamique des effluents, et, notamment, le régime d'écoulement. Il évalue et délivre sur deux sorties principales des données hydrodynamiques dans la partie de conduite dont on souhaite déterminer le type d'écoulement, la différence dV de vitesse entre gaz et liquide par exemple, ou la fraction β (β ∈ [0 ; 1]) d'écoulement de type stratifié (type où la phase liquide s'écoule dans la partie inférieure de la conduite). D'autres grandeurs qualifiant le type d'écoulement peuvent être calculées à partir de ces deux sorties.

Dans les applications à la thermodynamique, le modèle produit en sortie les grandeurs thermodynamiques des effluents, comme, par exemple, le nombre et la nature des phases en présence ou les fractions molaires des phases.

### 2) Structure du système de réseaux

La fonction que doit modéliser le modèle hydrodynamique ou thermodynamique fait appel à différentes sous-fonctions que l'on peut résoudre en utilisant si nécessaire plusieurs réseaux dont le rôle au sein du modèle est bien défini. Par exemple, un réseau peut être dédié à la régression de fonction non-linéaire, alors qu'un autre réseau sera dédié à la classification de différents régimes d'écoulements. Par ailleurs, les liens à établir entre réseaux ou entre le module et son environnement extérieur, peuvent nécessiter des traitements de données complémentaires (normalisation des données, dénormalisation, etc.). Ainsi, on parlera par la suite de système basé sur des réseaux de neurones.

Pour relier entre elles toutes les données hydrodynamiques ou thermodynamiques d'entrée et de sortie, on construit un système de réseaux de neurones, ces réseaux étant de préférence de type MLP bien connu des gens de l'art, car il est particulièrement bien adapté à la modélisation de phénomènes physiques. Sa structure permet de décrire tout à la fois les composantes dynamiques et statiques des phénomènes, en fixant même si nécessaire certains de ses paramètres à une valeur réifiée, et donc physiquement représentative. Ainsi, la connaissance d'équations physiques régissant les écoulements permet par exemple d'enrichir le réseau et de l'adapter au mieux aux phénomènes physiques qu'il modélise.

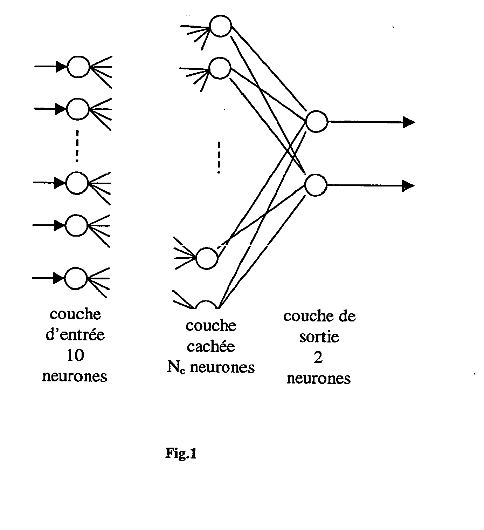

Le réseau de neurones comporte (Fig.1) par exemple trois couches : la couche d'entrée composée de dix neurones correspondant aux dix données (citées ci-dessus) du modèle physique complet, une couche de sortie de deux neurones correspondant aux deux paramètres recherchés dV et β, et une couche intermédiaire, dite couche cachée, dont le nombre de neurones N_{c} est optimisé. Le réseau est totalement connecté. La non linéarité de ce réseau est obtenue par une fonction d'activation sigmoïde régissant le comportement des neurones de la couche cachée. Les neurones de la couche de sortie peuvent être choisis linéaires ou non-linéaires. La fonction d'activation peut être par exemple la fonction identité.

### 3) Apprentissage

Les poids de cette structure sont déterminés à l'issue d'une phase d'apprentissage ; au cours de cette phase, on nourrit le réseau d'un ensemble de données constituant la base d'apprentissage du réseau, et on optimise la structure et les poids du réseau en minimisant des erreurs constatées pour l'ensemble des échantillons de la base, entre les données de sortie issues du calcul du réseau et les données attendues à la sortie, données par la base. Les erreurs peuvent être les erreurs absolues entre les grandeurs d'entrée et de sortie ou les erreurs relatives, selon la performance désirée pour le réseau.

Les facultés de généralisation du réseau sont ensuite testées sur sa capacité à bien calculer les deux sorties pour des entrées qui lui sont inconnues.

### Particularités de mise en oeuvre

Le système basé sur des réseaux de neurones modélisant le module hydrodynamique ou le module thermodynamique est défini par un ensemble de paramètres que la phase d'apprentissage permet de déterminer et de fixer. Ces paramètres sont adaptables aux contraintes fixées par l'utilisation à laquelle est dédié ce module.
- Si le module est destiné à une utilisation dans un cadre général, la base d'apprentissage utilisé doit être exhaustive c'est-à-dire inclure toutes les données disponibles concernant les différentes entrées/sorties ; le module est ainsi apte à représenter l'ensemble des cas que l'on peut rencontrer sur terrain.
- Si au contraire le module est destiné à être utilisé dans un cadre ou un contexte plus spécialisé, tel que la production d'un champ pétrolier comme dans le cas de l'invention, le calage est effectué sur une base d'apprentissage plus restreinte contenant seulement l'ensemble des données que l'on peut rencontrer sur ce champ uniquement : type ou structure des conduites ou pipelines, variations topographiques, gammes plus restreintes de variation de certaines grandeurs hydrodynamiques ou thermodynamiques, etc. Les paramètres des réseaux neuronaux sont dans un tel cas calculés de manière à obtenir un produit spécifique à une configuration donnée, de façon à représenter au mieux les écoulements dans des gammes opératoires propres à ce champ.

Ainsi, ce module est adaptable aux différents objectifs fixant son utilisation.

### Environnement du module à réseaux neuronaux

Le module développé peut être utilisé seul, sans autres modules associés. Dans ce cas, il est calé sur des bases de données constituées en fonction du spécifique pris en compte. Il est indépendant et permet d'estimer les grandeurs hydrodynamiques ou thermodynamiques susceptibles de permettre le suivi du comportement des écoulements d'effluents dans les pipelines, à partir d'une base d'apprentissage regroupant des données de grandeurs physiques et thermodynamiques fournies par ailleurs.

Le module peut également être implémenté dans tout modèle (ensemble de modules logiciels de simulation capables de simuler le comportement transitoire et/ou stationnaire des écoulements polyphasiques, tel que, par exemple, le modèle TACITE déjà cité. Dans ce tel cas, le module est calé sur des modèles de référence représentant l'état de l'art actuel, et sur des bases de données associées couvrant largement l'ensemble du domaine de définition du n-uplet que forment les données d'entrées. Son calage tient ainsi compte des spécificités de l'environnement logiciel dans lequel il est amené à s'intégrer.

Pour former la base d'apprentissage la mieux adaptée au modèle où le système de neurones doit être intégré, on utilise avantageusement le modèle pour relier entre elles les données d'entrée et de sortie.

### Exemples d'utilisation

Le module à base de réseaux neuronaux convient pour toute application nécessitant une représentation hydrodynamique d'effluents : réalisation de codes de simulation prédictifs d'écoulements, de simulation temps réel ou de simulations d'entraînement, etc. Les méthodes de contrôle actif en production peuvent aussi se baser sur un tel module.

### Exemples d'optimisation

On considère par exemple le cas où il s'agit d'optimiser un réseau donnant la classification du type d'écoulement de fluides polyphasiques : écoulement de type stratifié où de classe C1 (définie plus haut), écoulement de type intermittent ou de classe C2 (caractérisé par une succession de bouchons liquides et gazeux), ou bien encore de type dispersé ou de classe C3 (le liquide étant entraîné sous forme de fines gouttelettes), en fonction d'entrées comme décrit au paragraphe « Généralités sur la formation du réseau ».

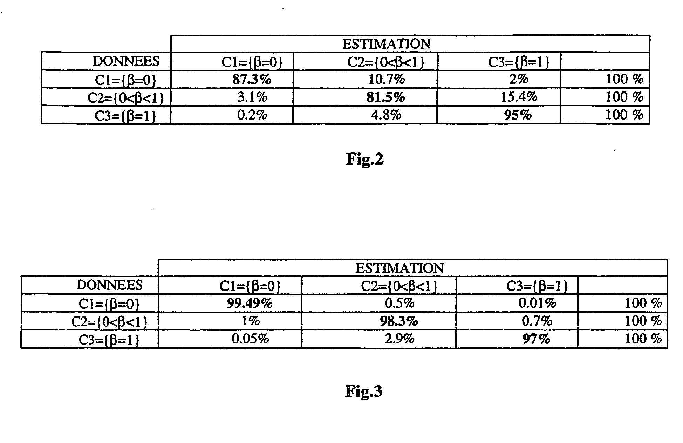

Dans un premier temps, on forme un réseau neuronal à l'aide d'une base générale. La structure optimale résultante que l'on obtient comporte 30 neurones, avec une seule couche cachée. La table de confusion du réseau obtenu (Fig.2) exprime le pourcentage de classification obtenu dans les trois classes de sortie du réseau pour chaque classe de la base de données.

Dans un second temps, on restreint la base de données utilisée en apprentissage à quelques configurations particulières, qui diminuent les plages de variation des différentes entrées du réseau. Le réseau neuronal optimal est dans ce cas constitué de 28 neurones et comporte une seule couche cachée. Le résultat de classification est matérialisé par la table de confusion de la Fig.3.

On vérifie immédiatement que les résultats de bonne classification, répartis sur la diagonale, sont bien améliorés par rapport au cas précédent formé au moyen d'une base moins sélective et moins adaptée à la configuration où le module doit fonctionner.

Ainsi, une adaptation de la base de données aux conditions d'utilisation permet de modifier d'une part la structure du réseau, d'autre part d'optimiser les résultats de généralisation obtenus.

## Revendications

1. Méthode pour former un module destiné à simuler en temps réel le mode d'écoulement en tout point d'une conduite, d'une veine de fluide polyphasique comprenant au moins une phase liquide et au moins une phase gazeuse, pour des conditions opératoires propres à une production d'un champ pétrolier, lesdites conditions portant sur des paramètres structurels définis relatifs à la conduite, sur un ensemble de grandeurs physiques hydrodynamiques ou thermodynamiques, et sur des gammes de variation fixées pour les dits paramètres et les dites grandeurs physiques, **caractérisée en ce que** ledit module est composé d'au moins un réseau de neurones non linéaire, construit selon les étapes suivantes :
- on construit ledit réseau de neurones avec une couche d'entrée pour des paramètres de structure et de grandeurs physiques, avec une couche de sortie où sont disponibles des grandeurs nécessaires à l'estimation du mode d'écoulement, et avec au moins une couche intermédiaire ;
- on constitue une base d'apprentissage avec des tables prédéfinies reliant différentes valeurs obtenues pour des données de sortie aux valeurs correspondantes de données d'entrée ;
- on restreint ladite base d'apprentissage en fonction desdites conditions opératoires, en ne conservant que des paramètres structurels, des grandeurs physiques, et des gammes de variation, que l'on peut rencontrer sur ledit champ ;
- on construit ladite couche d'entrée avec autant de neurones que de paramètres et de grandeurs physiques conservés ;
- on optimise ledit réseau en minimisant des erreurs constatées entre des données de sortie issues d'un calcul dudit réseau de neurones et des données attendues à la sortie issues de ladite base restreinte.

2. Méthode selon la revendication 1, dans laquelle les conditions opératoires comportent au moins l'une des données suivantes : type ou structure des conduites, variations topographiques.

3. Méthode selon l'une des revendications précédentes, dans laquelle ledit réseau de neurones étant intégré à un modèle général à la fois hydrodynamique et thermodynamique de simulation d'écoulements polyphasiques, on utilise le dit modèle pour former ladite base d'apprentissage, de manière à sélectionner l'ensemble de grandeurs physiques le mieux adapté au fonctionnement du modèle, ainsi que les gammes de variation fixées pour les dits paramètres et les dites grandeurs physiques.

## Claims

1. A method of forming a module intended for simulating in real time the flow mode, at all points in a pipe, of a stream of multiphase fluid comprising at least one liquid phase and at least one gaseous phase, for operating conditions specific to an oil field production, said conditions relating to defined structural parameters relative to the pipe, to a set of physical hydrodynamic or thermodynamic quantities, and to variation ranges which are fixed for said parameters and said physical quantities, **characterised in that** said module is composed of at least one network of non-linear neurones, constructed according to the following steps:
- constructing said network of neurones with an input layer for structural parameters and parameters of physical quantities, with an output layer wherein quantities required for estimating the flow mode are available, and with at least one intermediate layer;
- establishing a training set with predefined tables linking different values obtained for output data to the corresponding values of input data;
- restricting said training set depending on said operating conditions, only keeping structural parameters, physical quantities, and variation ranges, which can be encountered on said field;
- constructing said input layer with as many neurones as there are parameters and physical quantities kept;
- optimising said network by minimising errors observed between output data emerging from a calculation of said network of neurones and data expected at the output emerging from said restricted base.

2. The method according to Claim 1, wherein the operating conditions include at least one of the following data: type or structure of the pipes, topographical variations.

3. The method according to one of the preceding claims, wherein with said network of neurones being integrated to a general hydrodynamic as well as thermodynamic model of multiphase flow simulation, said model is used to form said training set, so as to select all of the physical quantities which are best suited to the operation of the model, together with the variation ranges fixed for said parameters and said physical quantities.

## Patentansprüche

1. Verfahren zur Bildung eines Moduls, das zur Echtzeit-Simulation der Strömungsweise, an jedem Punkt einer Leitung, einer Ader eines mehrphasigen Fluids, das mindestens eine flüssige Phase und mindestens eine gasförmige Phase umfasst, für Betriebsbedingungen, die für die Produktion in einem Ölfeld typisch sind, bestimmt ist, wobei die Bedingungen Strukturparameter, die in Bezug auf die Leitung definiert sind, eine Gruppe hydrodynamischer und thermodynamischer physikalischer Größen sowie Veränderungsbereiche, die für die Parameter und die physikalischen Größen festgelegt sind, betreffen, **dadurch gekennzeichnet, dass** das Modul aus mindestens einem nicht linearen neuronalen Netz gebildet ist, das den folgenden Schritten nach aufgebaut wird:
- das Erstellen des neuronalen Netzes mit einer Eingangsschicht für Strukturparameter und physikalische Größen, mit einer Ausgangsschicht, wo die zur Schätzung der Strömungsweise erforderlichen Größen zur Verfügung stehen, und mit mindestens einem Zwischensatz;
- das Erstellen einer Lerndatenbank mit vordefinierten Tabellen, die verschiedene Werte, die für Ausgabedaten erhalten werden, mit den Werten, die Eingabedaten entsprechen, in Verbindung setzen;
- das Einschränken der Lerndatenbank in Abhängigkeit der Betriebsbedingungen, wobei ausschließlich die Strukturparameter, die physikalischen Größen und die Veränderungsbereiche beibehalten werden, die auf dem Feld vorgefunden werden können;
- das Erstellen der Eingangsschicht mit gleich vielen Neuronen wie Parameter und physikalische Größen beibehalten sind;
- das Optimieren des Netzes durch Minimieren der festgestellten Fehler zwischen Ausgabedaten, die aus einer Berechnung des neuronalen Netzes hervorgehen, und erwarteten Daten am Ausgang, die aus der eingeschränkten Datenbank hervorgehen.

2. Verfahren nach Anspruch 1, wobei die Betriebsbedingungen mindestens eines der folgenden Daten umfassen: Typ oder Struktur der Leitungen, topographische Variationen.

3. Verfahren nach einem der vorangegangenen Ansprüche, wobei das neuronale Netz in einem allgemeinen, sowohl hydrodynamischen als auch thermodynamischen Modell zur Simulation mehrphasiger Strömungen integriert ist und das Modell zur Erstellung der Lerndatenbank verwendet wird, um die für die Arbeitsweise des Modells best geeignete Gruppe physikalischer Größen sowie die für die Parameter und die physikalischen Größen festgelegten Veränderungsbereiche auszuwählen.
